# EUROPÄISCHE PATENTANMELDUNG

(11) **EP 0 656 696 A2**
(43) Veröffentlichungstag der Anmeldung: **07.06.1995**
(21) Anmeldenummer: 94118362.6
(22) Anmeldetag: 22.11.1994
(51) Int. Cl.: H04B 3/54

(54) **Gleichstromenergieankopplung für einen Zweidrahtbus zur Energie- und Datenübertragung**

(30) Priorität: 03.12.1993 DE 4341331
(71) Anmelder: SIEMENS AKTIENGESELLSCHAFT, D-80333 München (DE)
(72) Erfinder: Schmitt, Manfred, Dipl.-Ing., D-92256 Hahnbach (DE); Wiesgickl, Bernhard, Dipl.-Ing. (FH), D-92249 Vilseck (DE)

(57) **Zusammenfassung**

Über einen Zweidrahtbus (1), an den Busteilnehmer (2) angeschlossen sind, sollen gleichzeitig Energie und Datensignale übertragen werden. Aufgrund des Spannungsabfalls auf der Busleitung ist die Strombelastbarkeit eingeschränkt. Erfindungsgemäß wird an mehreren Stellen des Zweidrahtbusses (1) zusätzlich über Koppelglieder (3) Energie für die angeschlossenen Busteilnehmer (2) eingespeist. Die Koppelglieder (3) trennen einzelne Bussegmente (20) energiemäßig voneinander und ermöglichen zugleich die Übertragung von Datensignalen zu allen Busteilnehmern (2). In den Koppelgliedern (3) sind hierzu im Leitungszug des Zweidrahtbusses (1) Kondensatoren (4,5) eingesetzt, die die Datensignale ungehindert übertragen, aber für einen Gleichstrom eine Sperre darstellen. In den Anschlußleitungen einer Gleichspannungsquelle (14) liegen Induktivitäten (6,7), die zwar die Datensignale sperren, jedoch den Gleichstrom hindurchlassen.

## Beschreibung

Die Erfindung bezieht sich auf einen Zweidrahtbus zur gleichzeitigen Übertragung von Gleichstromenergie und Datensignalen mit an den Zweidrahtbus angeschlossen Busteilnehmern, die durch den Zweidrahtbus mit Gleichstromenergie versorgt werden.

Üblicherweise stellt bei dem oben genannten Zweidrahtbus nur der Master als Sender die Energie für die Busteilnehmer bereit. Die Strombelastbarkeit eines Zweidrahtbusses ist aufgrund des ohmschen Widerstandes der Busleitung und des damit verbundenen Spannungsabfalls eingeschränkt.

Der Erfindung liegt die Aufgabe zugrunde, bei dem die den angeschlossenen Busteilnehmern zugeführte Energie unabhängig von einem am Anfang des Zweidrahtbusses angeschlossenen Master erhöht werden kann. Dies läßt sich erreichen mit einem Zweidrahtbus mit den Merkmalen gemäß Patentanspruch 1. Der Zweidrahtbus ist hier mit einem Koppelglied versehen, das erste Mittel aufweist, die zwar Datensignale unbeeinflußt hindurchlassen, aber einen Gleichstromenergiefluß sperren und das zweite Mittel aufweist, über die Gleichstromenergie in den Zweidrahtbus einspeisbar ist, die aber für die Datensignale eine Sperre darstellen. Eine besonders vorteilhafte Ausführung des Koppelgliedes erhält man, wenn dieses neben einem ersten Eingangsanschluß und einem ersten Ausgangsanschluß, zwischen denen ein erster Kondensator als erstes Mittel geschaltet ist, einen zweiten Eingangsanschluß und einen zweiten Ausgangsanschluß aufweist, zwischen denen ein zweiter Kondensator als erstes Mittel geschaltet ist, wobei die Eingangsanschlüsse zur Ankoppelung des Abschnittes des Zweidrahtbusses dienen, über die die Datensignale empfangen werden und die Ausgangsanschlüsse zur Ankoppelung des Abschnittes des Zweidrahtbusses dienen, an die die Datensignale weitergeleitet werden.

Weiterhin ist es vorteilhaft, wenn eine Gleichspannungsquelle vorgesehen ist, deren erster Pol über eine erste Induktivität des Koppelglieds an einen zwischen dem ersten Kondensator und dem ersten Ausgangsanschluß liegenden ersten Verbindungspunkt geschaltet ist und deren zweiter Pol über eine zweite Induktivität des Koppelglieds an einen zwischen dem zweiten Kondensator und dem zweiten Ausgangsanschluß liegenden zweiten Verbindungspunkt geschaltet ist.

Es erweist sich als günstig, wenn die Serienresonanzfrequenz des ersten Kondensators mit der ersten Induktivität sowie des zweiten Kondensators mit der zweiten Induktivität weit unterhalb der Übertragungsfrequenz der Datensignale liegt, weil unter diesen Bedingungen die Datensignale von der Gleichspannungsversorgung nicht bedämpft werden.

Eine weitere Verbesserung erreicht man, wenn zur ersten Induktivität ein dritter Kondensator und zur zweiten Induktivität ein vierter Kondensator parallel geschaltet ist, wobei die Parallelresonanzfrequenzen der beiden Parallelschaltungen der Übertragungsfrequenz der Datensignale entsprechen.

Weist der Zweidrahtbus mehrere Koppelglieder auf, so lassen sich hiermit auch die an einen sehr langen Zweidrahtbus angekoppelten Busteilnehmer nicht nur mit den Datensignalen sondern auch mit der erforderlichen Energie versorgen.

In manchen Anwendungsfällen ist es zweckmäßig, den Zweidrahtbus mit Verzweigungen auszuführen. Hierzu bietet sich als vorteilhafte Lösung an, an die Ausgangsanschlüsse eines Koppelgliedes mehrere Abschnitte von Zweidrahtbussen gemäß Anspruch 7 anzukoppeln.

Außerdem ist es vorteilhaft, wenn die Gleichspannungsquelle in dem Koppelglied integriert ist und mit diesem zusammen eine Einheit bildet.

Ein Ausführungsbeispiel der Erfindung wird im folgenden anhand einer Zeichnung näher erläutert. Es zeigen:
- FIG 1: einen erfindungsgemäßen Zweidrahtbus mit mehreren Koppelgliedern,
- FIG 2: die erfindungsgemäße Ausführung der Koppelglieder gemäß FIG 1.

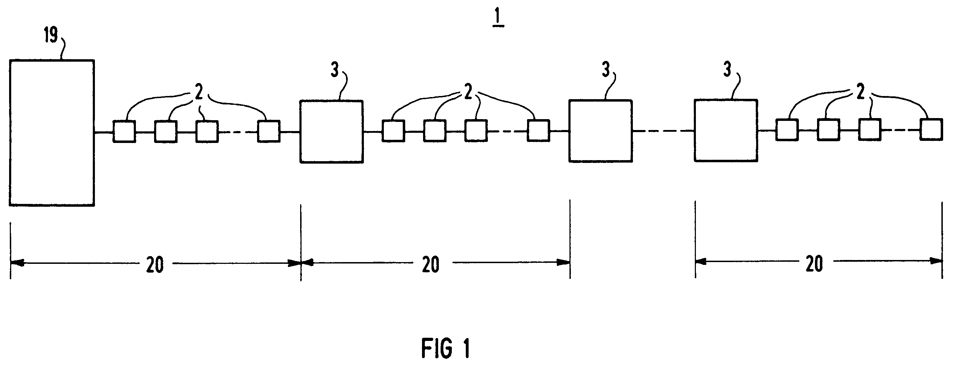

In FIG 1 ist ein Zweidrahtbus 1 dargestellt, an dem eine Vielzahl von Busteilnehmern 2 angeschlossen sind, an die aufgabengemäß von einem Master 19 gelieferte Datensignale zu übertragen sind. Der Zweidrahtbus 1 ist energiemäßig in einzelne Bussegmente 20 unterteilt. Das erste Segment wird üblicherweise vom Master mit Energie versorgt zur Energieversorgung der folgenden Segmente 20 ist zwischen die Segmente 20 jeweils ein Koppelglied 3 eingefügt, das die Datensignale ungehindert weiterüberträgt und die bis zum nächsten Koppelglied 3 nachfolgenden Busteilnehmer 2 mit Energie versorgt.

Das Koppelglied 3 ist mit zwei Eingangsanschlüssen 10,11 und zwei Ausgangsanschlüssen 12,13 versehen über die eine Ankopplung an den aufgetrennten Zweidrahtbus 1 erfolgt. Zwischen dem Eingangsanschluß 10 und dem Ausgangsanschluß 12 ist in dem Koppelglied 3 ein erster Kondensator 4 und zwischen dem Eingangsanschluß 11 und dem Ausgangsanschluß 13 ein zweiter Kondensator 5 geschaltet. Das Koppelglied 3 ist mit einer Gleichspannungsquelle 14 als Netzteil verbunden, deren erster Pol 15 über eine erste Induktivität 6 an einen ersten Verbindungspunkt 17 zwischen dem Kondensator 4 und dem Ausgangsanschluß 12 geschaltet ist und deren zweiter Pol 16 über eine zweite Induktivität 7 an einen zweiten Verbindungspunkt 18 zwischen dem Kondensator 5 und dem Ausgangsanschluß 13 geschaltet ist. Zu den Induktivitäten 6 bzw. 7 liegt jeweils ein Kondensator 8 bzw. 9 parallel.

Die Gleichspannungsquelle 14 kann wie erwähnt als separat ausgeführtes Netzteil mit dem Koppelglied 3 über Anschlüsse verbunden sein oder aber bereits in dem Koppelglied 3 als Einheit integriert sein.

Die beiden Kondensatoren 4,5 des Koppelgliedes 3 sorgen für eine gleichspannungsmäßige Trennung der einzelnen Bussegmente 20 und dienen gleichzeitig für die unbeeinflußte Übertragung der Datensignale.

Die Induktivitäten 6,7 verhindern, daß die Datensignale vom Netzteil, d.h. von der Gleichspannungsquelle 14 bedämpft werden. Hierzu ist es wichtig, daß die Werte der Kondensatoren 4,5 und Induktivitäten 6,7 so gewählt werden, daß die daraus resultierende Serienresonanzfrequenz weit unterhalb der Datenübertragungsfrequenz liegt. Mit den weiteren zu den Induktivitäten 6,7 parallel geschalteten Kondensatoren 8,9 wird eine weitere Verbesserung der Entkopplung erreicht, wenn die Werte der Induktivität 6 bzw. 7 und der Kondensatoren 8 bzw. 9 so aufeinander abgestimmt sind, daß bei der Übertragungsfrequenz für die Datensignale Parallelresonanz vorliegt.

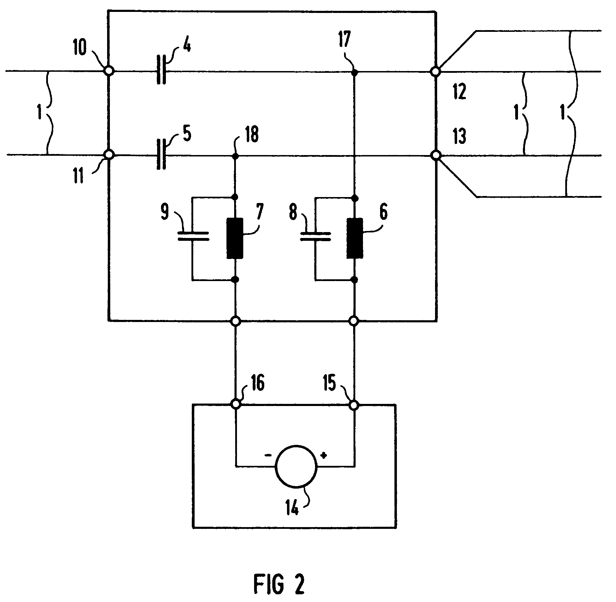

Wie aus FIG 2 ersichtlich, bietet das Koppelglied 3 auch die Möglichkeit einer Verzweigung, wobei an die Ausgangsanschlüsse 12,13 mehrere Zweidrahtbusse 1 angekoppelt werden.

Die Datensignale können bei einem entsprechend langen Zweidrahtbus 1 unter Umständen unzulässig abgeschwächt werden. Um dies zu verhindern, werden in angemessenen Abständen in den Zweidrahtbus 1 Repeater eingesetzt, die die Datensignale verstärken. Es erweist sich in einem solchen Fall als günstig, die Funktionen des beschriebenen Koppelgliedes 3 mit denen eines Repeaters in einem einzigen Koppelglied zu integrieren.

## Patentansprüche

1. Zweidrahtbus (1) zur gleichzeitigen Übertragung von Gleichstromenergie und Datensignalen mit an den Zweidrahtbus (1) angeschlossenen Busteilnehmern (2), die durch den Zweidrahtbus mit Gleichstromenergie versorgt werden und mit einem Koppelglied (3), das erste Mittel (4,5) aufweist, die zwar die Datensignale hindurchlassen, aber einen Gleichstromenergiefluß sperren und das zweite Mittel (6,7,8,9) aufweist, über die Gieichstromenergie in den Zweidrahtbus (1) einspeisbar ist, die aber für die Datensignale eine Sperre darstellen.

2. Zweidrahtbus nach Anspruch 1, **dadurch gekennzeichnet,** daß das Koppelglied (3) neben einem ersten Einganganschluß (10) und einem ersten Ausgangsanschluß (12) zwischen denen ein erster Kondensator (4) als erstes Mittel geschaltet ist, einen zweiten Eingangsanschluß (11) und einen zweiten Ausgangsanschluß (13) aufweist, zwischen denen ein zweiter Kondensator (5) als erstes Mittel geschaltet ist, wobei die Eingangsanschlüsse (10,11) zur Ankoppelung des Abschnittes des Zweidrahtbusses (1) dienen, über die die Datensignale empfangen werden und die Ausgangsanschlüsse zur Ankopplung des Abschnitts des Zweidrahtbusses dienen, an die die Datensignale weitergeleitet werden.

3. Zweidrahtbus nach Anspruch 1 oder 2, **dadurch gekennzeichnet,** daß eine Gleichspannungsquelle (14) vorgesehen ist, deren erster Pol (15) über eine erste Induktivität (6) des Koppelglieds (3) an einen zwischen dem ersten Kondensator (4) und dem ersten Ausgangsanschluß (12) liegenden ersten Verbindungspunkt (17) geschaltet ist und deren zweiter Pol (16) über eine zweite Induktivität (7) des Koppelglieds (3) an einen zwischen dem zweiten Kondensator (5) und dem zweiten Ausgangsanschluß (13) liegenden zweiten Verbindungspunkt (18) geschaltet ist.

4. Zweidrahtbus nach einem der vorangehenden Ansprüche, **dadurch gekennzeichnet,** daß die Serienresonanzfrequenz des ersten Kondensators (4) mit der ersten Induktivität (6) sowie des zweiten Kondensators (5) mit der zweiten Induktivität (7) weit unterhalb der Übertragungsfrequenz der Datensignale liegt.

5. Zweidrahtbus nach einem der vorangehenden Ansprüche, **dadurch gekennzeichnet,** daß zur ersten Induktivität (6) ein dritter Kondensator (8) und zur zweiten Induktivität (7) ein vierter Kondensator (9) parallel geschaltet ist, wobei die Parallelresonanzfrequenzen der beiden Parallelschaltungen (6,8 bzw. 7,9) der Übertragungsfrequenz der Datensignale entsprechen.

6. Zweidrahbus nach einem der vorangehenden Ansprüche, **dadurch gekennzeichnet,** daß der Zweidrahtbus (1) mehrere Koppelglieder (3) aufweist.

7. Zweidrahtbus nach einem der vorangehenden Ansprüche, **dadurch gekennzeichnet,** daß an die Ausgangsanschlüsse (12,13) eines Koppelgliedes (3) mehrere Abschnitte von Zweidrahtbussen (1) parallel angekoppelt sind.

8. Zweidrahtbus nach einem der vorangehenden Ansprüche, **dadurch gekennzeichnet,** daß die Gleichspannungsquelle (14) in dem Koppelglied (3) integriert ist.

9. Zweidrahtbus nach einem der vorangehenden Ansprüche, **dadurch gekennzeichnet,** daß das Koppelglied (3) in einem Repeater für die Datensignale integriert ist.
